# EUROPEAN PATENT SPECIFICATION

(11) **EP 2 957 648 B1**
(45) Date of publication and mention of the grant of the patent: **17.06.2020**
(21) Application number: 14746418.4
(22) Date of filing: 24.01.2014
(51) Int. Cl.: C23C 2/06, C23C 2/12, C23C 2/28, C23C 2/40, C23C 2/02, C22C 18/04, C22C 21/10

(54) **HOT-DIP AL-ZN ALLOY COATED STEEL SHEET AND METHOD FOR PRODUCING SAME**
FEUERVERZINKTES AL-ZN-BESCHICHTETES STAHLBLECH UND VERFAHREN ZUR HERSTELLUNG DAVON
TÔLE EN ACIER GALVANISÉE À CHAUD DANS UN BAIN AL-ZN ET PROCÉDÉ DE PRODUCTION CORRESPONDANT

(30) Priority: 31.01.2013 JP 2013017649
(43) Date of publication of application: 23.12.2015
(73) Proprietor: JFE Steel Corporation, Tokyo, 100-0011 (JP)
(72) Inventor: OOI, Toshihiko, Tokyo 141-0032 (JP); OKUMA, Toshiyuki, Tokyo 141-0032 (JP); FURUTA, Akihiko, Tokyo 141-0032 (JP); YOSHIDA, Masahiro, Tokyo 100-0011 (JP); MATSUZAKI, Akira, Tokyo 100-0011 (JP); ANDO, Satoru, Tokyo 100-0011 (JP)
(74) Representative: Hoffmann Eitle
(86) International application number: PCT/JP2014/000365
(87) International publication number: WO 2014/119268

(56) References cited:
- EP-A1- 0 028 821
- WO-A1-01/27343
- WO-A1-2008/025066
- WO-A1-2012/070694
- WO-A1-2012/070695
- JP-A- H09 256 132
- JP-A- 2002 173 753
- JP-A- 2003 213 396
- JP-A- 2004 323 932
- JP-A- 2007 162 087
- JP-A- 2010 229 483
- JP-B2- S6 128 748

## Description

### TECHNICAL FIELD

This disclosure relates to a hot-dip Al-Zn alloy coated steel sheet having good corrosion resistance in flat parts as well as good workability and thereby has excellent corrosion resistance in worked parts, and a method for producing the same.

### BACKGROUND

Since hot-dip Al-Zn alloy coated steel sheets have both the sacrificial corrosion protection property of Zn and the high corrosion resistance of Al, they show better corrosion resistance than other hot-dip coated steel sheets. For example, PTL 1 (JPS46007161B) discloses a hot-dip Al-Zn alloy coated steel sheet containing 25 mass% to 75 mass% of Al in the hot-dip coating. Further, because of their excellent corrosion resistance, a demand for hot-dip Al-Zn alloy coated steel sheets is increasing mainly in the field of building materials such as roofs, walls and the like which are exposed to outdoor environments for a long period of time, and the field of civil engineering and construction such as guardrails, wiring and piping, sound proof walls and the like.

The hot-dip coating of a hot-dip Al-Zn alloy coated steel sheet comprises an interfacial alloy layer existing in the interface with a base steel sheet, and an upper layer existing thereon. The upper layer is mainly composed of a part where Zn is contained in a supersaturated state and Al is solidified by dendrite solidification (Al rich phase), and a remaining interdendritic part (Zn rich phase), and has a structure with multiple Al rich phases stacked in the thickness direction of the hot-dip coating. Due to such characteristic coating structure, the corrosion path from surfaces becomes complicated, and corrosion less likely reaches the base steel sheet, and thus a hot-dip Al-Zn alloy coated steel sheet has better corrosion resistance than a hot-dip galvanized steel sheet with the same hot-dip coating thickness.

Further, on a surface of a hot-dip Al-Zn alloy coated steel sheet exists a spangle pattern resulting from solidification of the hot-dip coating. In the spangle, there is a minute unevenness corresponding to the Al rich phase and the Zn rich phase, and this unevenness causes a diffused reflection of light, and therefore the surfaces of the hot-dip Al-Zn alloy coated steel sheet present a beautiful appearance with a shining silver gray color.

Generally, for such hot-dip Al-Zn alloy coated steel sheet, a hot rolled steel sheet subjected to acid pickling descaling, or a cold rolled steel sheet obtained by subjecting said hot rolled steel sheet to cold rolling is used as the base steel sheet, and production is carried out in a continuous galvanizing line .

In detail, the base steel sheet is first heated to a specific temperature in an annealing furnace held in a reducing atmosphere, and while performing annealing, rolling oil or the like adhered to the surfaces of the steel sheet is removed, and the oxide film is reduced and removed. Then, by passing the base steel sheet inside a snout with its bottom end immersed in a molten bath, the base steel sheet is immersed in a hot-dip Al-Zn alloy molten bath.
Then, the steel sheet immersed in a molten bath is pulled upwards from the molten bath via a sink roll, then pressurized gas is blown onto the surfaces of the steel sheet from a gas wiping nozzle disposed on the molten bath to adjust coating weight, and then the steel sheet is cooled by a cooling device to obtain a hot-dip Al-Zn alloy coated steel sheet with a desirable hot-dip coating formed.

In order to guarantee desirable coating quality and material, heating treatment conditions and atmosphere conditions of the annealing furnace in the above continuous galvanizing line, operating conditions such as compositions of molten baths and cooling rates after hot-dip coating, are adjusted and managed.

Generally, if the hot-dip coating thickness is the same, the thinner the interfacial alloy layer is, the upper layer which provides an effect of improving corrosion resistance is thicker, and therefore, limiting growth of the interfacial alloy layer contributes to the improvement of corrosion resistance. Further, the interfacial alloy layer is harder than the upper layer and becomes the origin of cracks during processing. Therefore, limiting the growth of the interfacial alloy layer would reduce generation of cracks and provide an effect of improving bending workability. Further, in the generated cracks, the base steel sheet is exposed and corrosion resistance is poor. Therefore, reducing generation of cracks would improve the corrosion resistance in parts subjected to bending.

PTL 2 describes a steel strip having a coating of a metal alloy on at least one surface of the strip. The metal alloy contains aluminum, zinc, silicon, and magnesium as the major elements. The metal alloy also contains strontium and/or calcium and unavoidable impurities and optionally other elements that are present as deliberate alloying elements. The concentration of magnesium is at least 1 wt.% and the concentration of (i) strontium or (ii) calcium or (iii) strontium and calcium is greater than 50 ppm. Further, the metal alloy may be a titanium diboride-modified alloy.

PTL 3 describes an aluminum-zinc alloy coated ferrous product whose coating is highly ductile, and a method whereby such improved coating ductility may be realized. The process is characterized by the steps of thermally treating the aluminum-zinc alloy coated product by heating to a temperature between about 93°C and 427°C and holding for a period of time to effect metallurgical structure changes, among them being the precipitation of a second phase incoherent with the matrix, followed by slow cooling to at least 205°C. The resulting product is characterized by an aluminum-zinc alloy coating with a hardness no greater than about 115 VHN.

### CITATION LIST

### Patent Literature

PTL 1: JPS46007161B
PTL 2: WO 2008/025066 A1
PTL 3: EP 0 028 821 A1

As mentioned above, because of their excellent corrosion resistance, hot-dip Al-Zn alloy coated steel sheets are often used in the field of building materials such as roofs, walls and the like which are exposed outside for a long period of time.

Further, due to recent demands for resource saving and energy saving, in order to lengthen the life of products, there has been a demand for development of a hot-dip Al-Zn alloy coated steel sheet with better corrosion resistance.

Further, with a hot-dip Al-Zn alloy coated steel sheet manufactured in a continuous galvanizing line, rapid cooling would cause the hot-dip coating to solidify in a non-equilibrium manner and this would lead to hardening of the upper layer of the hot-dip coating. Therefore, cracks were generated in the hot-dip coating upon bending and would result in poor corrosion resistance in worked parts. For this reason, there has been a demand for an improvement in corrosion resistance in worked parts by an improvement in workability.

In view of these situations, it could be helpful to provide a hot-dip Al-Zn alloy coated steel sheet having good corrosion resistance in flat parts as well as good workability and thereby has excellent corrosion resistance in worked parts, and a method for producing the hot-dip Al-Zn alloy coated steel sheet in a continuous galvanizing line.

### SUMMARY

In order to solve the above problems, we have made intensive studies. As a result, we discovered that by containing at least one of Ca and Mg in the hot-dip coating, corrosion resistance can be improved. Further, we discovered that, by limiting the sizes of spangles formed in the hot-dip coating, good uniformity in appearance is guaranteed and, by setting the Vickers hardness of the hot-dip coating of the coated steel sheet after cooling to a particular range, the hot-dip coating is softened, good workability is obtained and thus corrosion resistance of worked parts is improved.

This disclosure has been made based on these discoveries and primary features thereof are as described below.
1. A hot-dip Al-Zn alloy coated steel sheet comprising:
   a base steel sheet; and
   a hot-dip coating on a surface of the base steel sheet, the hot-dip coating comprising an interfacial alloy layer existing in the interface with a base steel sheet, and an upper layer existing on the interfacial alloy layer, the upper layer having a composition consisting of Al in an amount of 20 mass% to 95 mass%, Si in an amount of 10 % or less of the Al content, at least one of Ca and Mg, the total content of Ca and Mg being 0.01 mass% to 10 mass%, optionally at least one of Mn, V, Cr, Mo, Sr, Ni, Co, and Sb in a total of 0.01 mass% to 10 mass%, and the balance being Zn and incidental impurities,
   wherein the mean Vickers hardness of the hot-dip coating is 50 Hv to 100 Hv, the mean Vickers hardness being determined as follows:
      the cross section of the hot-dip coating of a sample hot-dip Al-Zn alloy coated steel sheet is polished, then the Vickers hardness of twenty arbitrary areas on the upper layer side of the hot-dip coating is measured with a load of 5 g using a micro Vickers hardness gauge, and the mean value of the twenty areas measured is calculated, and
      wherein the mean size of spangles of the hot-dip coating is 0.5 mm or less, the mean size of spangles being determined as follows:
         a sample hot-dip Al-Zn alloy coated steel sheet is observed under an optical microscope by imaging the coated surface, then ten arbitrary straight lines of 10 mm are drawn over the photographs of the coated surface, and the numbers of spangles crossing the straight lines are counted to calculate the length per spangle, i.e. the spangle size.
2. The hot-dip Al-Zn alloy coated steel sheet according to aspect 1, wherein the upper layer contains 0.01 mass% to 5 mass% of Ca and 0.01 mass% to 5 mass% of Mg.
3. The hot-dip Al-Zn alloy coated steel sheet according to aspect 1 or 2, wherein the upper layer contains at least one of Mn, V, Cr, Mo, Sr, Ni, Co, and Sb in a total of 0.01 mass% to 10 mass%.
4. A method for producing a hot-dip Al-Zn alloy coated steel sheet in a continuous galvanizing line, the method comprising:
   immersing a base steel sheet in a molten bath to apply hot-dip coating thereon to obtain a coated steel sheet, the molten bath containing Al in an amount of 20 mass% to 95 mass%, Si in an amount of 10 % or less of the Al content, and at least one of Ca and Mg, the total content of Ca and Mg being 0.01 mass% to 10 mass%, optionally at least one of Mn, V, Cr, Mo, Sr, Ni, Co, and Sb in a total of 0.01 mass% to 10 mass%, and the balance being Zn and incidental impurities;
   holding the coated steel sheet at a temperature of 250 °C to 375 °C for 5 seconds to 60 seconds; and
      cooling the hot-dip coated steel sheet from a temperature of molten bath temperature minus 20 °C to a temperature of molten bath temperature minus 80 °C within 5 seconds prior to the temperature holding.
5. The method for producing a hot-dip Al-Zn alloy coated steel sheet according to aspect 4, wherein the molten bath contains 0.01 mass% to 5 mass% of Ca and 0.01 mass% to 5 mass% of Mg.
6. The method for producing a hot-dip Al-Zn alloy coated steel sheet according to aspect 4 or 5, wherein the molten bath contains at least one of Mn, V, Cr, Mo, Sr, Ni, Co, and Sbin a total of 0.01 mass% to 10 mass%.
7. The method for producing a hot-dip Al-Zn alloy coated steel sheet according to any one of aspects 4 to 6, wherein the cooling time of the coated steel sheet is within 3 seconds.
8. The method for producing a hot-dip Al-Zn alloy coated steel sheet according to any one of aspects 4 to 7, wherein the temperature at which the cooled coated steel sheet is held is 300 °C to 375 °C.
9. The method for producing a hot-dip Al-Zn alloy coated steel sheet according to any one of aspects 4 to 8, wherein the time of holding the cooled coated steel sheet is 5 seconds to 30 seconds.
10. The method for producing a hot-dip Al-Zn alloy coated steel sheet according to any one of aspects 4 to 9, wherein after cooling the coated steel sheet and prior to the temperature holding, the coated steel sheet before contacting top rolls is further cooled to 375 °C or lower.

With this disclosure, a hot-dip Al-Zn alloy coated steel sheet having good corrosion resistance in flat parts as well as good workability and thereby has excellent corrosion resistance in worked parts, can be produced in a continuous galvanizing line.

### BRIEF DESCRIPTION OF THE DRAWING

In the accompanying drawing:

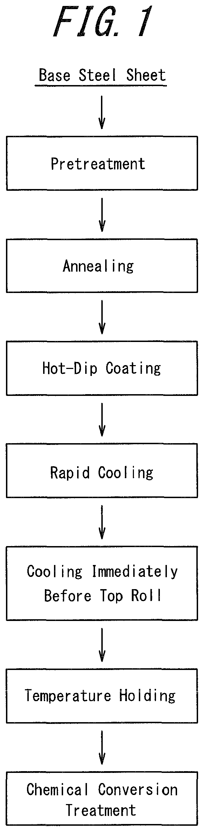

FIG. 1 shows a flow chart showing an embodiment of the method for producing a hot-dip Al-Zn alloy coated steel sheet of the disclosure.

### DETAILED DESCRIPTION

### (Hot-Dip Al-Zn Alloy Coated Steel Sheet)

The hot-dip Al-Zn alloy coated steel sheet disclosed herein has a hot-dip coating on a surface of the steel sheet and the hot-dip coating comprises an interfacial alloy layer existing in the interface with a base steel sheet, and an upper layer existing on the interfacial alloy layer. Further, the upper layer has a composition containing Al in an amount of 20 mass% to 95 mass%, Si in an amount of 10 % or less of the Al content, at least one of Ca and Mg, the total content of Ca and Mg being 0.01 mass% to 10 mass%, optionally at least one of Mn, V, Cr, Mo, Sr, Ni, Co, and Sb in a total of 0.01 mass% to 10 mass%, and the balance being Zn and incidental impurities, and the mean Vickers hardness of the hot-dip coating is 50 Hv to 100 Hv. Further, the mean size of the spangles of the hot-dip coating is 0.5 mm or less.

The Al content in the hot-dip coating, from the viewpoint of balancing the corrosion resistance with actual operation requirements, is 20 mass% to 95 mass%, and preferably 45 mass% to 85 mass%. If the Al content of the upper layer of the hot-dip coating is 20 mass% or more, dendrite solidification of Al occurs. Because of this, the upper layer mainly contains Zn in a supersaturated state, and has a structure with excellent corrosion resistance comprising a part where Al is solidified by dendrite solidification and a remaining interdendritic part, and the part where Al is solidified by dendrite solidification is stacked in the thickness direction of the hot-dip coating. Further, as the number of stacked Al dendrite increases, the corrosion path becomes complicated, and corrosion less likely reaches the base steel sheet, resulting in improved corrosion resistance. To obtain a significantly high corrosion resistance, the Al content of the upper layer is more preferably 45 mass% or more. On the other hand, if the Al content of the upper layer exceeds 95 mass%, the content of Zn which has sacrificial corrosion protection ability against Fe decreases, and corrosion resistance deteriorates. Therefore, the Al content of the upper layer is 95 mass% or less. Further, if the Al content of the upper layer is 85 mass% or less, sacrificial corrosion protection ability against Fe is ensured and sufficient corrosion resistance is obtained even if the coating weight decreases and the steel base easily becomes exposed. Therefore, the Al content of the upper layer of the hot-dip coating is preferably 85 mass% or less.

Further, Si inhibits the growth of the interfacial alloy layer formed in the interface with a base steel sheet, and is added to the molten bath for improving corrosion resistance and workability. Therefore, Si is necessarily contained in the upper layer of the hot-dip coating. Specifically, in the case of an Al-Zn coated steel sheet, and when coating treatment is performed in a molten bath containing Si, an alloying reaction takes place between Fe in the steel sheet surface and Al or Si in the bath as soon as the steel sheet is immersed in the molten bath, whereby an Fe-Al compound and/or an Fe-Al-Si compound is formed. By forming the Fe-Al-Si interfacial alloy layer, growth of the interfacial alloy layer is inhibited. If the Si content of the molten bath is 3 % or more of the Al content, the growth of the interfacial alloy layer can be sufficiently inhibited and therefore it is preferable. On the other hand, if the Si content of the molten bath exceeds 10 % of the Al content of the molten bath, an Si phase, which provides paths for cracks to propagate and may decrease workability, easily forms on the upper layer of the formed hot-dip coating. In view of the above, the Si content in the molten bath is 10 % or less of the Al content of the molten bath. As previously mentioned, the composition of the upper layer of the hot-dip coating is substantially the same as the composition of the molten bath, and therefore, the Si content of the upper layer of the hot-dip coating is 10 % or less of the Al content of the upper layer of the hot-dip coating.

Further, in this disclosure, it is important for the upper layer of the hot-dip coating to contain at least one of Ca and Mg, and the total content of Ca and Mg to be 0.01 mass% to 10 mass%. When the upper layer of the hot-dip coating is corroded, Ca and/or Mg is contained in the corrosion products, improves the stability of the corrosion products, causes a delay in corrosion development and as a result, corrosion resistance is improved. Here, the total content of Ca and/or Mg is set to 0.01 mass% to 10 mass% because by setting the content thereof to 0.01 mass% or more, a sufficient corrosion delaying effect is obtained, and by setting the content thereof to 10 mass% or less, the effect would not reach a plateau, an increase in producing costs would be limited, and the composition of the molten bath can easily be managed.

Further, in order to obtain a better corrosion resistance, the upper layer of the hot-dip coating preferably contains both of Ca and Mg, the Ca content being from 0.01 mass% to 5 mass%, and the Mg content being from 0.01 mass% to 5 mass%. This is because if the content of each of Ca and Mg is 0.01 mass% or more, a sufficient corrosion delaying effect can be obtained, and if the content of each component is 5 mass% or less, the effect would not reach a plateau, an increase in producing costs would be limited, and the composition of the molten bath can easily be managed.

Further, similarly to Ca and Mg, because they improve stability of corrosion products and have an effect of delaying development of corrosion, the upper layer preferably contains at least one of Mn, V, Cr, Mo, Sr, Ni, Co, and Sb in a total of 0.01 mass% to 10 mass%.

The interfacial alloy layer exists in the interface with a base steel sheet, and as previously mentioned, it is an Fe-Al compound and/or an Fe-Al-Si compound necessarily formed by alloying reaction between Fe in the steel sheet surface and Al or Si in the bath. Since the interfacial alloy layer is hard and brittle, it becomes the origin of cracks during processing when it grows thick. Therefore, the thickness thereof is preferably minimized.

Here, the interfacial alloy layer and the upper layer can be observed under a scanning electron microscope or the like to identify the polished and/or etched cross section of the hot-dip coating. Although there are several methods for polishing and etching the cross section, there is no particular limitation as long as the method is normally used for observing hot-dip coating cross sections. Further, regarding observing conditions using a scanning electron microscope, it is possible to clearly observe the interfacial alloy layer and the upper layer, for example, in reflected electron images at a magnification of 1000 times or more, with an acceleration voltage of 15 kV.

Whether at least one of Ca, Mg, Mn, V, Cr, Mo, Ti, Sr, Ni, Co, Sb, and B exists in the upper layer, can be confirmed by, for example, performing permeation analysis on the hot-dip coating using a glow discharge emission analyzer. However, using a glow discharge emission analyzer is only intended as an example, and any other method enabling examination of the presence and distribution of Ca, Mg, Mn, V, Cr, Mo, Ti, Sr, Ni, Co, Sb, and B in the upper layer of the hot-dip coating, can be applied.

Further, it is preferable for at least one of the above mentioned Ca, Mg, Mn, V, Cr, Mo, Sr, Ni, Co, and Sb to be forming, in the upper layer of the hot-dip coating, an intermetallic compound with at least one of Zn, Al, and Si. During the process of forming a hot-dip coating, the Al rich phase solidifies before the Zn rich phase, and therefore the intermetallic compound is discharged from the Al rich phase during the solidification process and gathered in the Zn rich phase, in the upper layer of the hot-dip coating. Since the Zn rich phase corrodes before the Al rich phase, at least one of Ca, Mg, Mn, V, Cr, Mo, Sr, Ni, Co, and Sb is incorporated in the corrosion product. As a result, it is possible to more effectively stabilize the corrosion product in the initial stage of corrosion. Further, it is more preferable for Si to be contained in the intermetallic compound, since in such case the intermetallic compound absorbs Si within the hot-dip coating to reduce excessive Si in the upper layer of the hot-dip coating and as a result, a decrease of bending workability caused by non-solid solution Si (Si phase) on the upper layer of the hot-dip coating can be prevented.

Further, the following methods may be used to confirm whether at least one of Ca, Mg, Mn, V, Cr, Mo, Ti, Sr, Ni, Co, Sb, and B is forming an intermetallic compound with at least one of Zn, Al, and Si. Namely, methods, such as detecting their intermetallic compounds by wide angle X-ray diffraction from surfaces of the coated steel sheet or by performing electron beam diffraction with a transmission electron microscope on the cross section of the hot-dip coating, are used. As long as their intermetallic compounds can be detected, any other method can be used.

Further, in the hot-dip Al-Zn alloy coated steel sheet disclosed herein, the mean size of spangles formed in the hot-dip coating is 0.5 mm or less. This is because, by making spangle sizes fine, the visibility of the spangles decreases and uniformity in the appearance improves. In particular, when forming a coating film of high gloss on the coated steel sheet, an effect of inhibiting embossing of spangles can be obtained.

The mean size of the spangles can be obtained by imaging the coated surfaces of samples using an optical microscope or the like, drawing arbitrary straight lines over the photographs, counting the number of spangles crossing straight lines, and dividing the length of the straight lines by the number of the spangles (length of straight lines/number of spangles).

In addition, regarding the hot-dip Al-Zn alloy coated steel sheet disclosed herein, the mean Vickers hardness of the hot-dip coating is 50 Hv to 100 Hv. Here, the Vickers hardness of the hot-dip coating refers to the Vickers hardness of the upper layer of the hot-dip coating.

By applying a soft material with a mean Vickers hardness of 100 Hv or less as the hot-dip coating, the hot-dip coating closely follows the base steel sheet during working such as bending to inhibit crack generation, and as a result, corrosion resistance equivalent to that in flat parts can be obtained in the parts subjected to bending. The lower limit of the Vickers hardness is set to 50 Hv to prevent the hot-dip coating from adhering to a die or the like at the time of forming.

Further, the hot-dip coating weight of the hot-dip Al-Zn alloy coated steel sheet disclosed herein is preferably 35 g/m² to 150 g/m² per side. If the coating weight is 35 g/m² or more, excellent corrosion resistance is obtained, and if the coating weight is 150 g/m² or less, excellent workability is obtained.

Further, the coated steel sheet may be a surface-treated steel sheet further having a chemical conversion treatment coating and/or a coating film on the surface thereof.

### (Method for Producing Hot-Dip Al-Zn Alloy Coated Steel Sheet)

The method for producing a hot-dip Al-Zn alloy coated steel sheet of the disclosure will be described with reference to the drawing.

FIG. 1 shows the general flow of part of the method for producing a hot-dip Al-Zn alloy coated steel sheet of the disclosure.

In the method for producing a hot-dip Al-Zn alloy coated steel sheet of the disclosure, production is carried out in a continuous galvanizing line. By producing in a continuous galvanizing line, Al-Zn coated steel sheets can be produced more efficiently compared to when producing by combining a continuous galvanizing line with a batch type heating apparatus.

In the disclosure, as shown in FIG. 1, the steel sheet to be treated (base steel sheet) is optionally subjected to treatment such as degreasing and pickling (pretreatment process), and annealing treatment (annealing process), then hot-dip coating treatment (hot-dip coating process) is performed by immersing the base steel sheet in a molten bath containing Al in an amount of 20 mass% to 95 mass%, Si in an amount of 10 % or less of the Al content, and at least one of Ca and Mg, the total content of Ca and Mg being 0.01 mass% to 10 mass%, and the balance including Zn and incidental impurities, then the hot-dip coated steel sheet is subjected to cooling from a temperature of molten bath temperature minus 20 °C to a temperature of molten bath temperature minus 80 °C within 5 seconds (rapid cooling process) to obtain a coated steel sheet, and then the coated steel sheet is held at a temperature of 250 °C to 375 °C for 5 seconds to 60 seconds (temperature holding process).

The base steel sheet used for the hot-dip Al-Zn alloy coated steel sheet of the disclosure is not limited to a particular type. For example, a hot rolled steel sheet or steel strip subjected to acid pickling descaling, or a cold rolled steel sheet or steel strip obtained by cold rolling them may be used.

Further, conditions of the pretreatment process and the annealing process are not particularly limited and any method may be adopted.

As long as a hot-dip Al-Zn alloy coating is formed on the base steel sheet, conditions of the hot-dip coating are not particularly limited and conventional methods may be followed. For example, the base steel sheet may be subjected to reduction annealing, then cooled to a temperature close to molten bath temperature, immersed in a molten bath, and then subjected to wiping to form a hot-dip coating with a desirable thickness.

The molten bath for the hot-dip coating contains Al in an amount of 20 mass% to 95 mass%, Si in an amount of 10 % or less of the Al content, and at least one of Ca and Mg, the total content of Ca and Mg being 0.01 mass% to 10 mass%, optionally at least one of Mn, V, Cr, Mo, Ti, Sr, Ni, Co, Sb, and B in a total of 0.01 mass% to 10 mass%,and the balance being Zn and incidental impurities.

Further, to obtain a higher effect of corrosion resistance, the molten bath preferably contains both Ca and Mg, the Ca content being from 0.01 mass% to 5 mass%, and the Mg content being 0.01 mass% to 5 mass%.

Further, the molten bath preferably contains at least one of Mn, V, Cr, Mo, Sr, Ni, Co, and Sb in a total of 0.01 mass% to 10 mass%. By adopting a molten bath with such composition, the hot-dip coating can be formed.

As mentioned above, the hot-dip coating formed by an Al-Zn molten bath comprises an interfacial alloy layer existing in the interface with a base steel sheet, and an upper layer existing on the interfacial alloy layer. Although the composition of the upper layer is slightly low in Al and Si contents on the interfacial alloy layer side, as a whole, it is substantially the same as the composition of the molten bath. Therefore, the composition of the upper layer of the hot-dip coating can be controlled with higher accuracy by controlling the composition of the molten bath.

As shown in FIG. 1, in the production method of the disclosure, the hot-dip coated steel sheet is cooled from a temperature of molten bath temperature minus 20 °C to a temperature of molten bath temperature minus 80 °C within 5 seconds (rapid cooling process). With this rapid cooling process, formation of spangles can be inhibited, and excellent uniformity in appearance can be obtained especially when forming a coating film. In particular, the mean size of spangles is limited to 0.5 mm or less.

Further, to obtain a higher inhibiting effect of spangles, the cooling time of the rapid cooling is preferably 3 seconds or less, and more preferably 1 second or less. When the cooling time until reaching the temperature of molten bath temperature minus 80 °C exceeds 5 seconds, a sufficient inhibiting effect of spangles cannot be obtained and the mean size of spangles cannot be limited to 0.5 mm or less.

Further, as shown in FIG. 1, before contacting the coated steel sheet after immersing in a molten bath with top rolls, the steel sheet is preferably further cooled to 375 °C or lower (cooling immediately before top rolls). This is because, if the temperature of the coated steel sheet before contacting the top rolls is higher than 375 °C, the hot-dip coating could adhere to the top rolls when the coated steel sheet contacts with the top rolls, and part of the hot-dip coating could come off (metal pickup).

As used herein, the term "top rolls" refers to the first rolls the coated steel sheet comes into contact with after subjecting the base steel sheet to hot-dip coating.

Next, the method for improving the workability of the hot-dip coating which is most important in the disclosure will be described below. In production method described herein, it is important to hold the hot-dip coated steel sheet at a temperature of 250 °C to 375 °C for 5 seconds to 60 seconds (temperature holding process). With this temperature holding process, strains introduced into the hot-dip coating by the above described non-equilibrium solidification which becomes the cause of hardening of the hot-dip coating are released and a phase separation of the Al rich phase and the Zn rich phase in the Al-Zn alloy coating is facilitated and enables softening of the hot-dip coating. As a result, workability can be improved. Further, compared to the hot-dip coating obtained by conventional production methods, with the hot-dip coating obtained by the production method of the disclosure, the number and width of the cracks generated during production decrease and therefore the corrosion resistance in worked parts can be improved.

If the holding temperature is lower than 250 °C or if the holding time is less than 5 seconds, the hot-dip coating rapidly hardens and will not sufficiently release strains or cause separation of the Al rich phase and the Zn rich phase, and therefore a desirable workability cannot be obtained. On the other hand, a holding temperature exceeding 375 °C is not preferable considering the above mentioned metal pick up, and a holding time exceeding 60 seconds is too long and therefore it is not suitable for production in a continuous galvanizing line.

Further, to achieve a better workability, the temperature at which the coated steel sheet is held during the temperature holding process is preferably 300 °C to 375 °C, and more preferably 350 °C to 375 °C.

Similarly, the time of holding the hot-dip coated steel sheet is preferably 5 seconds to 30 seconds, and more preferably 5 seconds to 20 seconds.

In the production method described herein, processes after the temperature holding process are not particularly limited and hot-dip Al-Zn alloy coated steel sheets may be produced according to conventional methods. For example, as shown in FIG. 1, it is possible to form a chemical conversion treatment coating (chemical conversion treatment process) or to form a coating film in a separate coating apparatus (coating film forming process) on the surface of the hot-dip Al-Zn alloy coated steel sheet after the temperature holding process.

The chemical conversion treatment coating can be formed by a chromating treatment or a chromium-free chemical conversion treatment where for example, a chromating treatment liquid or a chromium-free chemical conversion treatment liquid is applied, and without washing them with water, the steel is dried at a temperature of 80 °C to 300 °C. These chemical conversion treatment coatings may have a single-layer structure or a multilayer structure, and in case of a multiple layer structure, chemical conversion treatment can be performed multiple times sequentially.

Further, methods of forming the coating film include roll coater coating, curtain flow coating, and spray coating. The coating film can be formed by applying paint containing organic resin, and then heating and drying by means such as hot air drying, infrared heating, and induction heating.

### EXAMPLES

The following describes examples.

Using a cold rolled steel sheet with sheet thickness of 0.35 mm produced by a conventional method as the base steel sheet, sample hot-dip Al-Zn alloy coated steel sheets were produced in a continuous galvanizing line. The composition of the molten bath, and the cooling time of the coated steel sheet, conditions of the holding temperature and time of the coated steel sheet after passing through the top rolls, and the composition of the upper layer of the hot-dip coating are shown in Table 1.

The production of all sample hot-dip Al-Zn alloy coated steel sheets was performed with a molten bath temperature of 600 °C, coating weight of 75 g/m² per side and 150 g/m² for both sides.

### (Mean Size of Spangles of Hot-Dip Coating)

Each sample hot-dip Al-Zn alloy coated steel sheet was observed under an optical microscope by imaging the coated surface. Ten arbitrary straight lines of 10 mm were drawn over the photographs of the coated surface, and the numbers of spangles crossing the straight lines were counted to calculate the length per spangle, i.e. the spangle size. The calculation results are shown in Tables 1-1 and 1-2.

### (Vickers Hardness of Hot-Dip Coating)

For each sample hot-dip Al-Zn alloy coated steel sheet, the cross section of the hot-dip coating was polished, and then the Vickers hardness of twenty arbitrary areas on the upper layer side of the hot-dip coating was measured with a load of 5 g using a micro Vickers hardness gauge. The mean value of the twenty areas measured was calculated and used as the hardness of the hot-dip coating. The calculated results are shown in Tables 1-1 and 1-2.

### (Evaluation of Corrosion Resistance)

### (1) Evaluation of Corrosion Resistance in the Flat Part

For each sample hot-dip Al-Zn alloy coated steel sheet, a salt spray test was performed in accordance with JIS Z2371-2000. The time required until red rust generated in each sample was measured, and evaluated based on the following criteria.
Good: Red Rust Generation Time ≥ 4000 hours
Poor: Red Rust Generation Time < 4000 hours

### (2) Evaluation of Corrosion Resistance in Parts Subjected to Bending

For each sample hot-dip Al-Zn alloy coated steel sheet, four sheets with the same sheet thickness were placed inside and 180° bending (4T bending) was performed, and then a salt spray test was performed in the outside of the bending in accordance with JIS Z2371-2000. The time required until red rust generated in each sample was measured, and evaluated based on the following criteria.
Good: Red Rust Generation Time ≥ 4000 hours
Poor: Red Rust Generation Time < 4000 hours

### (Evaluation of Uniformity in Appearance)

The mean size of spangles of each sample hot-dip Al-Zn alloy coated steel sheet was evaluated based on the following criteria.
Good: Mean Size of Spangles ≤ 0.5 mm
Fair: Mean Size of Spangles > 0.5 mm

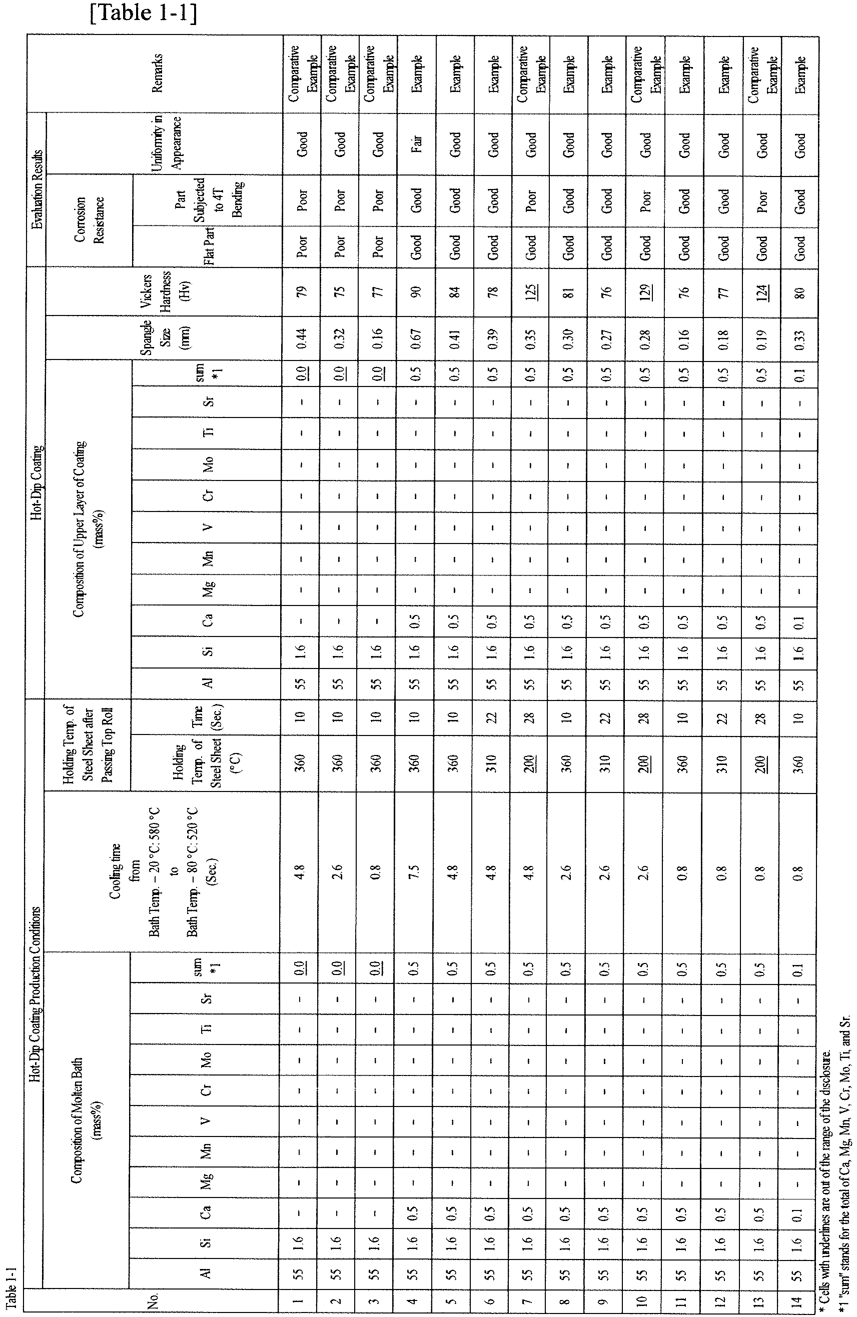

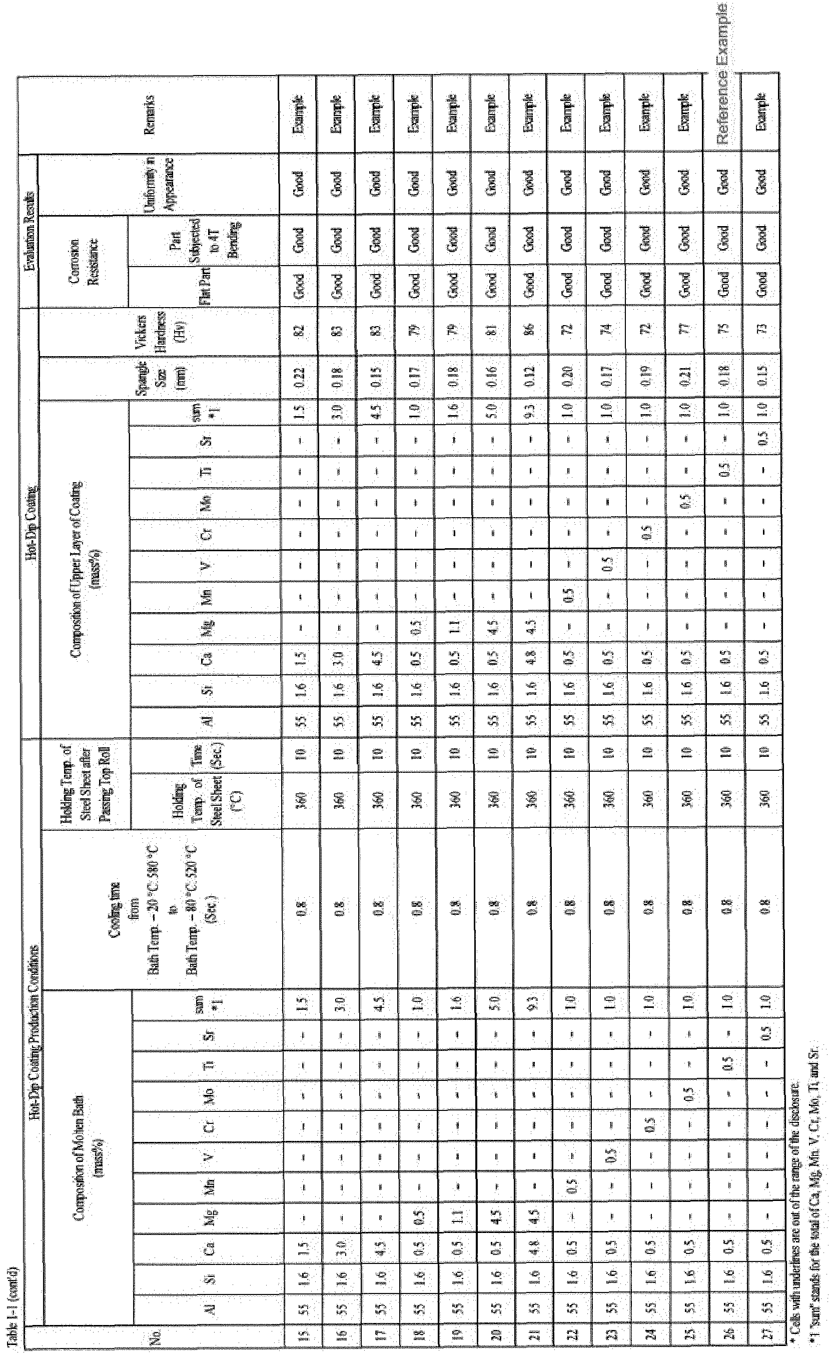

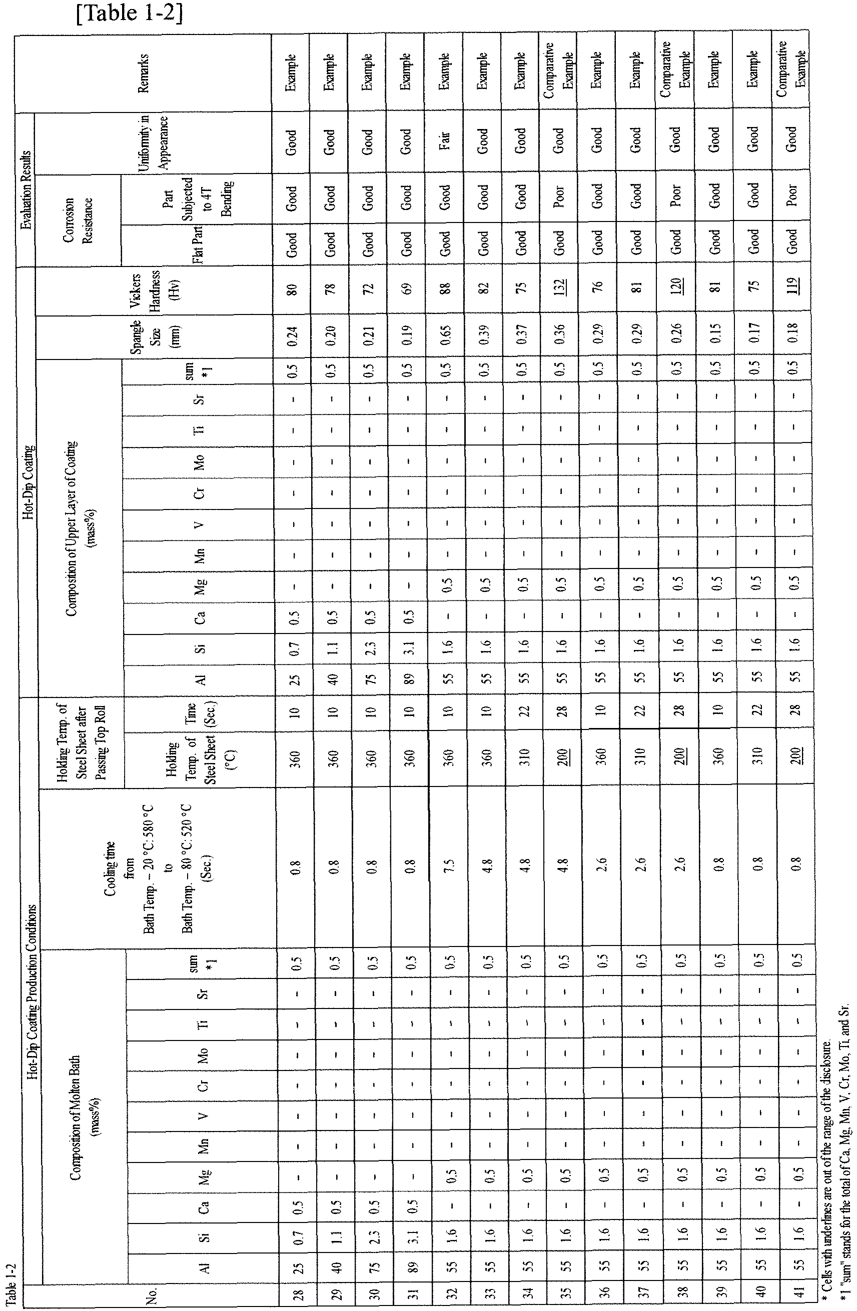

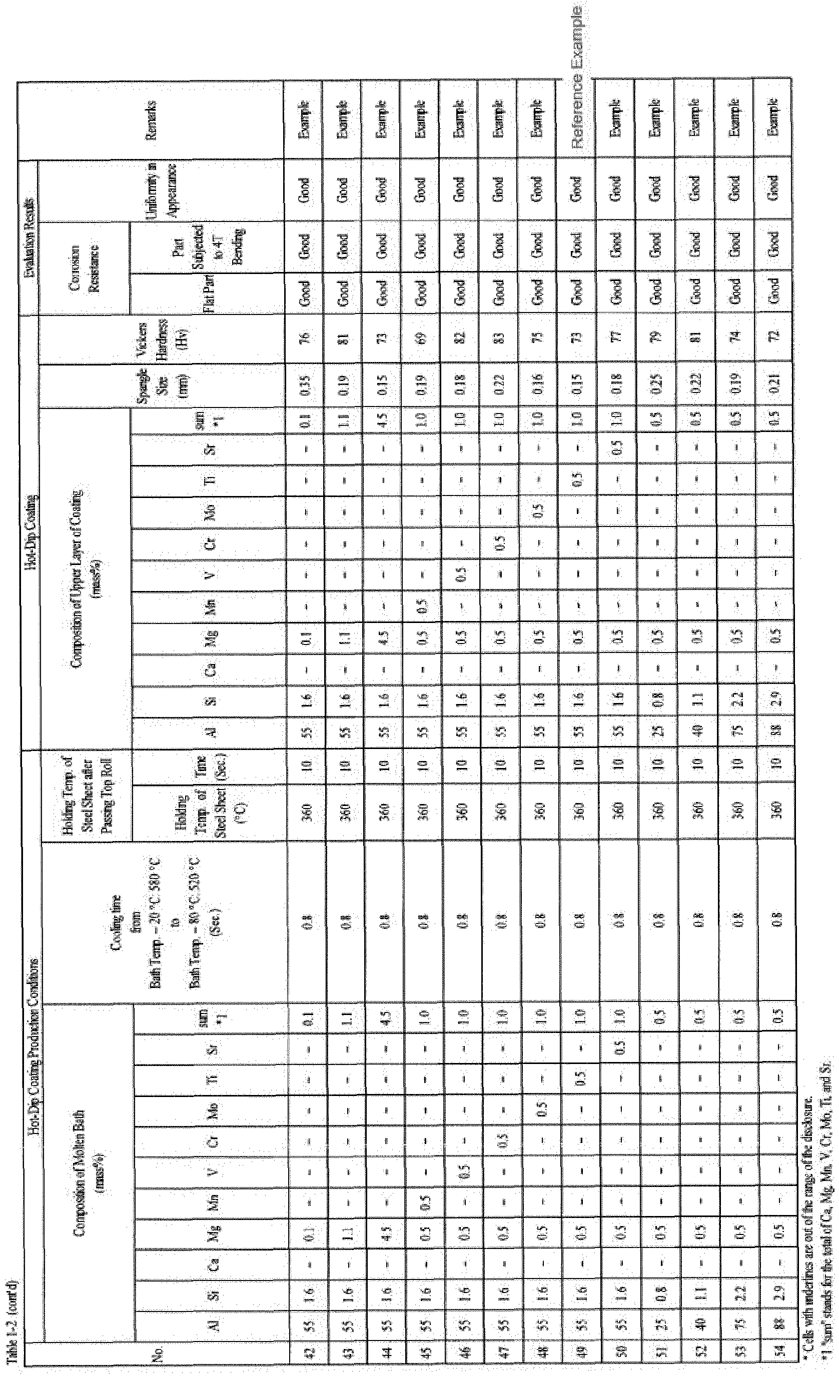

Tables 1-1 and 1-2 show that each sample of the disclosure has better corrosion resistance compared to each sample of the comparative examples, and that the Vickers hardness of each sample of the disclosure is 100 Hv or less and they are soft.

Specifically, each of our samples has better corrosion resistance than samples 1 to 3 which do not contain Ca and Mg in the hot-dip coating. Further, each of our samples has smaller Vickers hardness and better corrosion resistance in the parts subjected to bending compared to samples 7, 10, 13, 35, 38, and 41 of comparative examples where the steel sheets were held at low temperature after passing through the top rolls. Further, among our samples, samples 4 and 32, which were not subjected to rapid cooling after hot-dip coating, showed a larger spangle size compared to the other samples.

### INDUSTRIAL APPLICABILITY

With this disclosure, a hot-dip Al-Zn alloy steel sheet having good corrosion resistance in flat parts, as well as good workability and thus excellent corrosion resistance in worked parts can be obtained, and applied in a wide range of fields, mainly in the field of building materials.

## Claims

1. A hot-dip Al-Zn alloy coated steel sheet comprising:
a base steel sheet; and
a hot-dip coating on a surface of the base steel sheet, the hot-dip coating comprising an interfacial alloy layer existing in the interface with a base steel sheet, and an upper layer existing on the interfacial alloy layer, the upper layer having a composition consisting of
Al in an amount of 20 mass% to 95 mass%,
Si in an amount of 10 % or less of the Al content,
at least one of Ca and Mg, the total content of Ca and Mg being 0.01 mass% to 10 mass%,
optionally at least one of Mn, V, Cr, Mo, Sr, Ni, Co, and Sb in a total of 0.01 mass% to 10 mass%, and
the balance being Zn and incidental impurities,
wherein the mean Vickers hardness of the hot-dip coating is 50 Hv to 100 Hv, the mean Vickers hardness being determined as follows:
the cross section of the hot-dip coating of a sample hot-dip Al-Zn alloy coated steel sheet is polished, then the Vickers hardness of twenty arbitrary areas on the upper layer side of the hot-dip coating is measured with a load of 5 g using a micro Vickers hardness gauge, and the mean value of the twenty areas measured is calculated, and
wherein the mean size of spangles of the hot-dip coating is 0.5 mm or less, the mean size of spangles being determined as follows:
a sample hot-dip Al-Zn alloy coated steel sheet is observed under an optical microscope by imaging the coated surface, then ten arbitrary straight lines of 10 mm are drawn over the photographs of the coated surface, and the numbers of spangles crossing the straight lines are counted to calculate the length per spangle, i.e. the spangle size.

2. The hot-dip Al-Zn alloy coated steel sheet according to claim 1, wherein the upper layer contains 0.01 mass% to 5 mass% of Ca and 0.01 mass% to 5 mass% of Mg.

3. The hot-dip Al-Zn alloy coated steel sheet according to claim 1 or 2, wherein the upper layer contains at least one of Mn, V, Cr, Mo, Sr, Ni, Co, and Sb in a total of 0.01 mass% to 10 mass%.

4. A method for producing a hot-dip Al-Zn alloy coated steel sheet in a continuous galvanizing line, the method comprising:
immersing a base steel sheet in a molten bath to apply hot-dip coating thereon to obtain a coated steel sheet, the molten bath containing Al in an amount of 20 mass% to 95 mass%, Si in an amount of 10 % or less of the Al content, at least one of Ca and Mg, the total content of Ca and Mg being 0.01 mass% to 10 mass%, optionally at least one of Mn, V, Cr, Mo, Sr, Ni, Co, and Sb in a total of 0.01 mass% to 10 mass%, and the balance being Zn and incidental impurities; and
cooling the hot-dip coated steel sheet from a temperature of molten bath temperature minus 20 °C to a temperature of molten bath temperature minus 80 °C within 5 seconds prior to
holding the coated steel sheet at a temperature of 250 °C to 375 °C for 5 seconds to 60 seconds.

5. The method for producing a hot-dip Al-Zn alloy coated steel sheet according to claim 4, wherein the molten bath contains 0.01 mass% to 5 mass% of Ca and 0.01 mass% to 5 mass% of Mg.

6. The method for producing a hot-dip Al-Zn alloy coated steel sheet according to claim 4 or 5, wherein the molten bath contains at least one of Mn, V, Cr, Mo, Sr, Ni, Co, and Sb in a total of 0.01 mass% to 10 mass%.

7. The method for producing a hot-dip Al-Zn alloy coated steel sheet according to any one of claims 4 to 6, wherein the cooling time of the coated steel sheet is within 3 seconds.

8. The method for producing a hot-dip Al-Zn alloy coated steel sheet according to any one of claims 4 to 7, wherein the temperature at which the cooled coated steel sheet is held is 300 °C to 375 °C.

9. The method for producing a hot-dip Al-Zn alloy coated steel sheet according to any one of claims 4 to 8, wherein the time of holding the cooled coated steel sheet is 5 seconds to 30 seconds.

10. The method for producing a hot-dip Al-Zn alloy coated steel sheet according to any one of claims 4 to 9, wherein after cooling the coated steel sheet and prior to the temperature holding, the coated steel sheet before contacting top rolls is further cooled to 375 °C or lower.

## Patentansprüche

1. Mit einer Al-Zn-Legierung schmelztauchbeschichtetes Stahlblech, umfassend:
ein Basisstahlblech; und
eine Schmelztauchbeschichtung auf einer Oberfläche des Basisstahlblechs, wobei die Schmelztauchbeschichtung eine Grenzflächenlegierungsschicht, die in der Grenzfläche mit dem Basisstahlblech vorhanden ist, und eine obere Schicht, die auf der Grenzflächenlegierungsschicht vorhanden ist, umfasst, wobei die obere Schicht eine Zusammensetzung aufweist, bestehend aus
Al in einer Menge von 20 Massen-% bis 95 Massen-%,
Si in einer Menge von 10 % oder weniger des Al-Gehalts,
mindestens einem aus Ca und Mg, wobei der Gesamtgehalt von Ca und Mg 0,01 Massen-% bis 10 Massen-% beträgt,
gegebenenfalls mindestens einem aus Mn, V, Cr, Mo, Sr, Ni, Co und Sb in einer Gesamtmenge von 0,01 Massen-% bis 10 Massen-% und
wobei der Rest Zn und zufällige Verunreinigungen sind,
worin die mittlere Vickers-Härte der Schmelztauchbeschichtung 50 Hv bis 100 Hv beträgt, wobei die mittlere Vickers-Härte wie folgt bestimmt wird:
der Querschnitt der Schmelztauchbeschichtung einer Probe des mit einer Al-Zn-Legierung schmelztauchbeschichteten Stahlblechs wird poliert, anschließend wird die Vickers-Härte von zwanzig beliebigen Bereichen auf der Seite der oberen Schicht der Schmelztauchbeschichtung mit einer Last von 5 g unter Verwendung eines Mikro-Vickers-Härtemessers gemessen und der Mittelwert der zwanzig gemessenen Bereiche wird berechnet, und
worin die mittlere Größe von Zinkblumen der Schmelztauchbeschichtung 0,5 mm oder weniger beträgt, wobei die mittlere Größe von Zinkblumen wie folgt bestimmt wird:
eine Probe des mit einer Al-Zn-Legierung schmelztauchbeschichteten Stahlblechs wird unter einem optischen Mikroskop durch Abbilden der beschichteten Oberfläche beobachtet, anschließend werden zehn beliebige gerade Linien von 10 mm über die Fotografien der beschichteten Oberfläche gezogen und die Anzahl der Zinkblumen, die die geraden Linien kreuzen, werden zur Berechnung der Länge pro Zinkblume, d.h. die Zinkblumengröße, gezählt.

2. Mit einer Al-Zn-Legierung schmelztauchbeschichtetes Stahlblech gemäß Anspruch 1, worin die obere Schicht 0,01 Massen-% bis 5 Massen-% Ca und 0,01 Massen-% bis 5 Massen-% Mg enthält.

3. Mit einer Al-Zn-Legierung schmelztauchbeschichtetes Stahlblech gemäß Anspruch 1 oder 2, worin die obere Schicht mindestes eines aus Mn, V, Cr, Mo, Sr, Ni, Co und Sb in einer Gesamtmenge von 0,01 Massen-% bis 10 Massen-% enthält.

4. Verfahren zur Herstellung eines mit einer Al-Zn-Legierung schmelztauchbeschichteten Stahlblechs in einer kontinuierlichen Verzinkungsanlage, das Verfahren umfassend:
das Eintauchen eines Basisstahlblechs in ein Schmelzbad, so dass darauf eine Schmelztauchbeschichtung aufgetragen wird, wobei ein beschichtetes Stahlblech erhalten wird, das Schmelzbad enthaltend Al in einer Menge von 20 Massen-% bis 95 Massen-%, Si in einer Menge von 10 % oder weniger des Al-Gehalts, mindestens eines aus Ca und Mg, wobei der Gesamtgehalt von Ca und Mg 0,01 Massen-% bis 10 Massen-% beträgt, gegebenenfalls mindestens eines aus Mn, V, Cr, Mo, Sr, Ni, Co und Sb in einer Gesamtmenge von 0,01 Massen-% bis 10 Massen-% und wobei der Rest Zn und zufällige Verunreinigungen sind; und
das Abkühlen des schmelztauchbeschichteten Stahlblechs von einer Temperatur der Schmelzbadtemperatur minus 20 °C auf eine Temperatur der Schmelzbadtemperatur minus 80 °C innerhalb von 5 Sekunden bevor
das beschichtete Stahlblech bei einer Temperatur von 250 °C bis 375 °C für 5 Sekunden bis 60 Sekunden gehalten wird.

5. Verfahren zur Herstellung eines mit einer Al-Zn-Legierung schmelztauchbeschichteten Stahlblechs gemäß Anspruch 4, worin das Schmelzbad 0,01 Massen-% bis 5 Massen-% Ca und 0,01 Massen-% bis 5 Massen-% Mg enthält.

6. Verfahren zur Herstellung eines mit einer Al-Zn-Legierung schmelztauchbeschichteten Stahlblechs gemäß Anspruch 4 oder 5, worin das Schmelzbad mindestens eines aus Mn, V, Cr, Mo, Sr, Ni, Co und Sb in einer Gesamtmenge von 0,01 Massen-% bis 10 Massen-% enthält.

7. Verfahren zur Herstellung eines mit einer Al-Zn-Legierung schmelztauchbeschichteten Stahlblechs gemäß mindestens einem der Ansprüche 4 bis 6, worin die Abkühlzeit des beschichteten Stahlblechs innerhalb von 3 Sekunden liegt.

8. Verfahren zur Herstellung eines mit einer Al-Zn-Legierung schmelztauchbeschichteten Stahlblechs gemäß mindestens einem der Ansprüche 4 bis 7, worin die Temperatur, bei der das abgekühlte beschichtete Stahlblech gehalten wird, 300 °C bis 375 °C beträgt.

9. Verfahren zur Herstellung eines mit einer Al-Zn-Legierung schmelztauchbeschichteten Stahlblechs gemäß mindestens einem der Ansprüche 4 bis 8, worin die Zeit des Haltens des abgekühlten beschichteten Stahlblechs 5 Sekunden bis 30 Sekunden beträgt.

10. Verfahren zur Herstellung eines mit einer Al-Zn-Legierung schmelztauchbeschichteten Stahlblechs gemäß mindestens einem der Ansprüche 4 bis 9, worin das beschichtete Stahlblech nach dem Abkühlen des beschichteten Stahlblechs und vor dem Halten bei einer Temperatur vor dem Kontaktieren der Oberwalzen ferner auf 375 °C oder niedriger abgekühlt wird.

## Revendications

1. Tôle d'acier revêtue d'alliage d'Al-Zn galvanisée à chaud comprenant :
une tôle d'acier de base ; et
un revêtement galvanisé à chaud sur une surface de la tôle d'acier de base, le revêtement galvanisé à chaud comprenant une couche d'alliage interfaciale existant dans l'interface avec une tôle d'acier de base, et une couche supérieure existant sur la couche d'alliage interfaciale, la couche supérieure présentant une composition constituée des éléments suivants :
de l'Al selon une quantité de 20 % en masse à 95 % en masse,
du Si selon une quantité de 10 % ou moins de la teneur en Al,
au moins un élément parmi Ca et Mg, la teneur totale en Ca et Mg étant de 0,01 % en masse à 10 % en masse,
éventuellement au moins un élément parmi Mn, V, Cr, Mo, Sr, Ni, Co et Sb selon une quantité totale de 0,01 % en masse à 10 % en masse, et
le restant étant du Zn et des impuretés fortuites,
dans laquelle la dureté Vickers moyenne du revêtement galvanisé à chaud est de 50 Hv à 100 Hv, la dureté Vickers moyenne étant déterminée comme suit :
la section transversale du revêtement galvanisé à chaud d'un échantillon de tôle d'acier revêtue d'alliage d'Al-Zn galvanisée à chaud est polie, puis la dureté Vickers de vingt zones arbitraires du côté de la couche supérieure du revêtement galvanisé à chaud est mesurée avec une charge de 5 g en utilisant une microjauge de dureté Vickers et la valeur moyenne des vingt zones est calculée, et
dans laquelle la taille moyenne de paillettes du revêtement galvanisé à chaud est de 0,5 mm ou moins, la taille moyenne des paillettes étant déterminée comme suit :
un échantillon de tôle d'acier revêtue d'alliage d'Al-Zn galvanisée à chaud est observé au microscope optique en formant des images de la surface revêtue, puis dix lignes droites arbitraires de 10 mm sont tirées sur les photographies de la surface revêtue et les nombres de paillettes traversant les lignes droites sont comptés pour calculer la longueur par paillette, c'est-à-dire la taille des paillettes.

2. Tôle d'acier revêtue d'alliage d'Al-Zn galvanisée à chaud selon la revendication 1, dans laquelle la couche supérieure contient 0,01% en masse à 5 % en masse de Ca et 0,01% en masse à 5 % en masse de Mg.

3. Tôle d'acier revêtue d'alliage d'Al-Zn galvanisée à chaud selon la revendication 1 ou 2, dans laquelle la couche supérieure contient au moins un élément parmi Mn, V, Cr, Mo, Sr, Ni, Co et Sb selon une quantité totale de 0,01 % en masse à 10 % en masse.

4. Procédé de production d'une tôle d'acier revêtue d'alliage d'Al-Zn galvanisée à chaud dans une chaîne de galvanisation continue, le procédé comprenant :
l'immersion d'une tôle d'acier de base dans un bain fondu pour y appliquer un revêtement galvanisé à chaud afin d'obtenir une tôle d'acier revêtue, le bain fondu contenant de l'Al selon une quantité de 20 % en masse à 95 % en masse, du Si selon une quantité de 10 % ou moins de la teneur en Al, au moins un élément parmi Ca et Mg, la teneur totale en Ca et Mg étant de 0,01 % en masse à 10 % en masse, éventuellement au moins un élément parmi Mn, V, Cr, Mo, Sr, Ni, Co et Sb selon une quantité totale de 0,01 % en masse à 10 % en masse, et le restant étant formé de Zn et d'impuretés fortuites ; et
le refroidissement de la tôle d'acier revêtue galvanisée à chaud d'une température égale à la température du bain fondu moins 20 °C à une température égale à la température du bain fondu moins 80 °C dans un laps de temps de 5 secondes avant de
maintenir la tôle d'acier revêtue à une température de 250 °C à 375 °C pendant 5 secondes à 60 secondes.

5. Procédé de production d'une tôle d'acier revêtue d'alliage d'Al-Zn galvanisée à chaud selon la revendication 4, dans lequel le bain fondu contient 0,01 % en masse à 5 % en masse de Ca et 0,01 % en masse à 5 % en masse de Mg.

6. Procédé de production d'une tôle d'acier revêtue d'alliage d'Al-Zn galvanisée à chaud selon la revendication 4 ou 5, dans lequel le bain fondu contient au moins un élément parmi Mn, V, Cr, Mo, Sr, Ni, Co et Sb selon une quantité totale de 0,01 % en masse à 10 % en masse.

7. Procédé de production d'une tôle d'acier revêtue d'alliage d'Al-Zn galvanisée à chaud selon l'une quelconque des revendications 4 à 6, dans lequel le temps de refroidissement de la tôle d'acier revêtue se situe dans les 3 secondes.

8. Procédé de production d'une tôle d'acier revêtue d'alliage d'Al-Zn galvanisée à chaud selon l'une quelconque des revendications 4 à 7, dans lequel la température à laquelle la tôle d'acier revêtue refroidie est maintenue est de 300 °C à 375 °C.

9. Procédé de production d'une tôle d'acier revêtue d'alliage d'Al-Zn galvanisée à chaud selon l'une quelconque des revendications 4 à 8, dans lequel le temps de maintien de la tôle d'acier revêtue refroidie est de 5 secondes à 30 secondes.

10. Procédé de production d'une tôle d'acier revêtue d'alliage d'Al-Zn galvanisée à chaud selon l'une quelconque des revendications 4 à 9, dans lequel, après refroidissement de la tôle d'acier revêtue et avant maintien de la température, la tôle d'acier revêtue est en outre refroidie à 375 °C ou moins avant de venir en contact avec les rouleaux supérieurs.
